# EUROPEAN PATENT SPECIFICATION

(11) **EP 2 136 621 B1**
(45) Date of publication and mention of the grant of the patent: **08.05.2013**
(21) Application number: 07720067.3
(22) Date of filing: 04.04.2007
(51) Int. Cl.: A01N 25/12, A01N 59/16, C01B 25/00, C01F 5/00, C01F 11/00, C01G 1/00

(54) **ANTIMICROBIAL MATERIAL**
ANTIMIKROBIELLE SUBSTANZ
MATERIAU ANTIMICROBIEN

(43) Date of publication of application: 30.12.2009
(73) Proprietor: Perlen Converting AG, 6035 Perlen (CH); ETH Zurich, 8092 Zürich (CH)
(72) Inventor: BOKORNY, Stefan, 6275 Ballwil (CH); STARK, Wendelin, Jan, 8049 Zürich (CH); LOHER, Stefan, Fridolin, 9462 Montlingen (CH)
(74) Representative: Grimm, Siegfried
(86) International application number: PCT/CH2007/000170
(87) International publication number: WO 2008/122131

(56) References cited:
- WO-A-03/070640
- WO-A-2005/087660
- WO-A-2006/084390

## Description

### Technical Field

The present invention relates to nanoparticles comprising or consisting of a non-persistent support material and metallic silver particles on the surface of said support material; to composite materials comprising or consisting of a polymer and said nanoparticles embedded therein, to the manufacture of nanoparticles and composites and to uses of said nanoparticles and composites based on antimicrobial properties of said nanoparticles.

### Background Art

Silver has been used for decades as a disinfectant, predominately in the form of ionic silver solutions such as AgNO₃ solution. Although the activity of silver is not fully understood it enjoys a widespread application in different forms (ionic and metallic) and physical appearance (in solution or as a solid). A number of silver containing materials are known:

EP0190504 discloses nanoparticles doped with silver and having a particle size <5000nm; the incorporation of such particles in polymers; their use as coating for medical appliances. Reference is also made to hydroxyapatite nanoparticles with silver deposited on its surface; but the document is silent on the manufacturing of such particles. In the context of tantalum oxide, the use of sol-gel processes is suggested. This process results in relatively large and porous particles. Particles of the above described size are unfavorable due to their color, transparency and antimicrobial properties.

WO2006/084390 discloses antimicrobial nanoparticles comprising silica and metallic silver nanoparticles wherein the metallic silver nanoparticles have a size of < 20nm as determined by electron microscopy (high-resolution transmission microscopy and scanning transmission microscopy) and confirmed by X-ray powder diffraction. The support material exclusively consists of silica whose persistence is considered higher as certain metal phosphates such as calcium phosphate. Further, it contains no phosphate and therefore limits the release of silver triggered by the uptake of phosphate ions by microorganisms. The size of the metallic silver nanoparticles in the range of 5-20 nm which further limits the available silver surface area subjected to dissolution.

WO2005/087660 discloses nanoparticles and their manufacturing wherein said nanoparticles consist of a non-persistent material having a hydrodynamic particle diameter <200nm. This document also suggests including ionic silver into said compact material for obtaining antimicrobial materials. However, this document does not disclose nanoparticles with metallic silver on the surface of nanoparticles. Further, no teaching on how to manufacture metallic silver containing nanoparticles can be found in said document.

WO2004/005184 discloses the preparation of a nanoparticulate, oxidic support material comprising ceria, and/or ceria/zirconia and additionally comprising a noble metal. This material may later be used as a catalyst in high temperature processes because of its excellent high temperature stability. Due to its chemical composition the support material is considered persistent in the context of this invention.

WO03/070640 discloses persistent mixed metal oxides obtained by a modified flame spray pyrolysis.

Thus, it is an object of the present invention to mitigate at least some of these drawbacks of the state of the art. In particular, it is an aim of the present invention to provide a material that can be degraded in biological environments and is highly antimicrobial over prolonged periods. Further, there is a need to provide materials suitable for the manufacture products with advantageous optical and antimicrobial properties. Further, there is a need to provide materials that are antimicrobial in the presence of sulphur / sulphur containing compounds.

These objectives are achieved by providing nanoparticles as described in claim 1 and composites as described in claim 6. Further aspects of the invention are disclosed in the specification and independent claims, preferred embodiments are disclosed in the specification and the dependent claims.

### Disclosure of the Invention

Hence, it is a general object of the invention to provide an improved antimicrobial material that overcomes the limitations or disadvantages of the prior art.

Now, in order to implement these and still further objects of the invention, which will become more readily apparent as the description proceeds, the invention relates in a first aspect to an antimicrobial nanoparticle which is manifested by the features that it contains (i.e. comprises or consists of) a nanoparticulate non-persistent support material and metallic silver nanoparticles located on the surface of said support material. The antimicrobial nanoparticles are further characterized by a hydrodynamic particle diameter <500nm, by a particle size <10 nm of at least 95% by number of the metallic silver particles and by a water content below 5%(w/w).

The invention relates in a second aspect to composites containing such nanoparticles.

The invention further relates in a third aspect to articles containing such nanoparticles or composites.

The invention further relates in a fourth aspect to the manufacture of nanoparticles.

The invention further relates in a fifth aspect to the manufacture of composites.

The invention further relates in a sixth aspect to the manufacture of articles containing such nanoparticles or composites.

The invention further relates in a seventh aspect to the use of such composites.

The invention further relates in a eight aspect to the use of such nanoparticles.

Thus, in a first aspect, the invention relates to nanoparticles containing (i.e. comprising or consisting of) a non-persistent support material and metallic silver particles on the surface of said support material wherein at least 95%(w/w) of said nanoparticles have a hydrodynamic diameter <500nm; said nanoparticles have a water content <5%(w/w); said support material is a salt wherein the anion is selected from the group comprising or consisting of phosphates, carbonates, sulphates or mixtures thereof; at least 95%(n/n)of said metallic silver particles have a diameter of <10nm. The nanoparticles as disclosed herein have beneficial antimicrobial properties.

Details of the nanoparticles as disclosed herein, as well as advantageous embodiments of the nanoparticles are given below:

Hydrodynamic diameter: The nanoparticles as disclosed herein are characterized by a hydrodynamic particle diameter of below 500 nm, preferably below 200 nm as determined by X-ray disk centrifugation outlined in [1]. The size of the support material or the final silver containing support material used in the prior art is typically >1000nm, rendering the obtained antimicrobial polymer opaque or at least limited in terms of transparency. It was found that polymers containing antimicrobial nanoparticles as described herein do not show such disadvantageous properties.

Water Content: The nanoparticles as disclosed herein are further characterized by a low water content. Typically, the material loses less than 5% (w/w) of water upon heating to 500°C for 30 min under flowing argon, as detected by thermogravimetry. Support materials obtained by a wet chemistry process contain large amounts of water, typically >10%(w/w). The flame spray pyrolysis process for manufacturing the nanoparticles as disclosed herein avoids this high water content. A low water content is beneficial for further processing the nanoparticles, e.g. when manufacturing a composite as described below.

Non-persistent support material: The support material of the nanoparticles as described herein is known and described e.g. in WO2005/087660, which is incorporated by reference. The term "non-persistent" is known in the field. "Non-persistence" is a characteristic of materials which have a potential for degradation and/or resorption of the material in biological environments. More specifically, "Non-persistent" in this context is a material which fulfills one or more of the following criteria:
i. Solubility: The material has a solubility of at least 20 ppm (w/w, based on the weight of the solvent) between a pH of 5-8.5 in water at 25°C while if necessary only non-complexing buffers (e.g. Bis-Tris buffer, Good's buffers) are used to fix the pH. The solubility is further determined by adding 100 mg of material to 1.0 liter of optionally buffered water and measuring the concentration of dissolved components e.g. by atomic absorption spectrometry or mass spectrometry.
ii. Biodegradation in an organism: The biodegradation rate of the material in a living organism (e.g. mammalian) is at least 10 ppm per day based on the weight of the organism. Biodegradation is defined as the resorption and/or degradation of the material and its subsequent elimination from the body or its non-toxic incorporation in the organism's tissue (e.g. dissolution of calcium from calcium carbonate and subsequent transport and incorporation in bone).
iii. Degradation in a cell culture model: The degradation rate of the material in a cell culture model (e.g. skin cells, lung cells, liver cells) is at least 50 ppm per day based on the weight of the living cells. The skilled researcher is able to chose the appropriate cell line for a given application of the material (e.g. for an application of the material which comes in contact with the human skin, preferably human skin cells are applied).

Typical non-persistent inorganic materials are metal salts such as phosphates, sulphates or carbonates. Typical examples for persistent (non-degradable) materials are, titania, aluminum oxide, zeolites, zirconium oxide and cerium oxide. It is known that nanoparticulate materials enter cells and may have a toxic effect. In case of persistent materials the damage is unsure and may not be evaluated within a reasonable time. Thus, the use of non-persistant materials is advantageous. Further, it is believed that non-persistent materials improve the antimicrobial properties. For example, the phosphate anion may serve as an enabler of the release-on-demand if the material is in direct contact with a microorganism. This release on demand property is important for an efficient use of the silver within the material.

Metallic silver particles: The nanoparticles as disclosed herein contain silver in a nanoparticlulate, metallic or partially ionic form. At least 95 % based on the number of the metallic nanoparticles ("95%(n/n)") are present as metallic silver nanoparticles with a diameter below 10 nm, more preferably below 5 nm as determined by electron microscopy. More specifically, the size is determined by either scanning transmission electron microscopy or high-resolution transmission electron microscopy on e.g. a CM30 (Philips, LaB6 cathode, operated at 300 kV, point resolution > 2 Å). Due to present limitation in resolution of electron microscopes a metallic silver particle < 1nm is not considered a particle in the context of this invention. A metallic silver particle <1nm is herein called an atom-cluster or even a molecule. Therefore metallic silver particles <1nm are not included in the number based size distribution of the metallic silver particles. It is known that the size of metallic silver particles limits the dissolution and the release of ionic silver. It was found that silver particles of the above identified size provide a useful and powerful antimicrobial effect. The antimicrobial effect is related to the total available silver surface which means that smaller silver particles (e.g. <5 nm) are preferred over larger ones (> 5nm). Further, the use of a support material for the silver nanoparticles has the advantage of keeping them separated and further the amount of silver in a later polymeric formulation can be easily adjusted. Dispersibility of the powder in the polymer or pre-polymer is also facilitated when using a support material. Further, it is known that the growth of most unwanted occurring microorganisms on the surface of commodity products is often nutrition limited. Using a non-persistent support which provides nutrition ions (such as phosphates) but which also carries a highly active antimicrobial agent (e.g. silver in a nanoparticulate form) could function as a "Trojan horse". It is believed that such a release-on-demand proceeds as follows: While the inorganic support material (e.g. at the vicinity of the surface of a polymeric coating or bulk material) is slowly taken up by a microorganism, the silver would also be taken up. The silver which crossed the wall of the microorganism now functions as a silver ion supply right at the most vulnerable location being most efficient.

The nanoparticles disclosed herein contain metallic silver particles in an effective amount, i.e. an amount that allows control of microorganisms when applied. An appropriate amount may be determined according to the mode of application and the microorganism to be controlled by routine experiments. In an advantageous embodiment, the silver content of the antimicrobial nanoparticles is between 0.1-20%(w/w), preferably between 0.5-10 %(w/w), particular preferably between 1-10 %(w/w), The silver deposited on the support material is present as metallic silver, i.e. oxidation state +/-O; however, due to redox reactions with the support material or the environment, part of the silver may be oxidized resulting in Ag+ (oxidation state +1). Thus, the nanoparticles as described herein contain metallic silver particles and optionally in addition silver in ionic form. This situation is reflected by the expression "metallic and partially ionic form".

In a further advantageous embodiment, the non-persistent material is a salt wherein the cation is selected from the group consisting of calcium, bismuth and magnesium.

In an advantageous embodiment, the non-persistent material is a calcium phosphate, preferably tricalcium phosphate ("TCP") and in particular an XRD-amorphous form of tricalcium phosphate. XRD-amorphous TCP is characterized by the inexistence of distinct diffraction peaks of the material when measured by conventional X-ray powder diffraction [2]. It was found that these materials result in nanoparticles with particular good antimicrobial properties.

In a further advantageous embodiment, the non-persistent material is magnesium-doped TCP. It was found that these materials result in nanoparticles with particular good antimicrobial properties.

In a second aspect, the invention relates to a composite material containing (i.e. comprising or consisting of) a polymer and nanoparticles as described herein, wherein said nanoparticles are dispersed in said polymer. Such composite material ("composite") described above is a low-cost, highly active antimicrobial composite and may be used in a number of applications such as polymeric commodity products; for the coating of large areas (such as paints) and other polymeric coatings for surfaces. In general, the composite is considered useful, where contamination with microorganisms is undesired. It is believed that the release of silver ions from metallic silver is a slow process but sufficient in certain circumstances to develop an antimicrobial activity. Using metallic silver allows for a virtually never ending supply of silver ions. Limited through its solubility, a cytotoxic burst is unlikely to happen in environments relevant to its later use. Further it is believed that the release of silver ions from metallic silver is strongly dependent on the surface of the metal and therefore the size of the particles. It was found by the inventors of the present invention that the composites as described herein provide a highly efficient and long-lasting antimicrobial effect.

Polymer: The composite material, as described herein further comprises a polymer. The polymer acts as a matrix in which the antimicrobial nanoparticles are dispersed or embedded; preferably in an amount of 0.02-50 % (w/w), more preferably 5-30 % (w/w), most preferably 10-20 %(w/w). In general, all polymers known or obtainable according to known methods are suitable for manufacturing such composites. The term polymer shall also embrace polymer blends and reinforced polymers.

In an advantageous embodiment of the invention, the polymer is hydrophobic polymer. Such hydrophobic polymers can be identified by a skilled person; preferably hydrophobic polymers are characterized by a water contact angle of >65° at 25 °C.

In an advantageous embodiment of the invention, the polymer is selected form the group consisting of silicones, polyethylene, polypropylene, polystyrene, polycarbonates, polyetheretherketones, poly(vinyl chloride), poly(ethylene terephtalate), polyamides, poly-tetrafluoroethylene, poly(vinyl acetate), polyesters, polyurethanes, styrene-block copolymers, polymethyl methacrylate, polyacrylates, acrylic-butadiene-styrene copolymers, natural and synthetic rubber, acrylonitrile rubber, and mixtures or copolymers thereof.

In an advantageous embodiment of the invention, the polymer is a biodegradable polymer. Biodegradation of organic matter proceeds first via a decomposition process (hydrolysis) either enzymatically or nonenzymatically into nontoxic products (i.e. monomers or oligomers) and further is eliminated from the body or metabolized therein [Hayashi, T., "Biodegradable Polymers for Biomedical Uses", Progress in Polymer Science, 1994, 19, 633]. Such biodegradable polymers can be identified by a skilled person; preferably biodegradable polymers are characterized by a limited dwell time in an organism (biodegradable polymers as used in degradable implants) or in an environment (biodegradable polymers for packaging).

Typical examples include polyesters such as polylactide or poly(lactic acid co glycolic acid), polyurethanes, starch based polymers, and others.

In an advantageous embodiment of the present invention, the nanopraticles are dispersed predominantly (i.e. >50%, preferably >90%) on the surface of the polymer matrix in the form of a coating. Since the silver right at the vicinity of the surface has the highest impact it is generally sufficient to only apply a coating to the material which should have antimicrobial activity.

In an advantageous embodiment of the present invention, the nanoparticles are dispersed homogeneously within the polymer matrix. Silver nanoparticles in the bulk material still release silver ions to the environment resulting in a twofold attack to microorganisms in contact with the antimicrobial composite.

The invention further relates in a third aspect to articles containing such nanoparticles. In particular, the invention relates to a foil, coating, fibre, woven or non-woven material containing (i.e. comprising or consisting of) a composite as described herein.

Correspondingly, the invention relates to articles packed with a foil as described herein and to devices coated with a coating as described herein.

The invention further relates in a fourth aspect to the manufacture of such nanoparticles. Here, preferable methods comprehend the direct preparation of such particles e.g. by flame spray synthesis of suitable precursor materials. Thus, the invention relates to a process for manufacturing nanoparticles as described herein comprising the steps of a) preparing a combustible solution containing i) a soluble precursor of the cation of the support material, in particular a carboxylate, ii) a soluble silver precursor, iii) a soluble precursor of the anion of the support material, iv) optionally a solvent, in particular 2-ethylhexanoic acid and b) subjecting said solution to a flame spray pyrolysis process.

Flame spray pyrolysis ("FSP"): FSP is known in the field for manufacturing nanoparticles. In general, suitable methods for manufacturing nanoparticles are described in WO2005/087660, which is incorporated by reference, with particular reference to the examples for manufacturing calcium phosphates. For the FSP to proceed, the feed to the flame needs to be a combustible solution, i.e. the feed must be i) a combustible composition and ii) a solution substantially free of un-dissolved particles. Details on suitable feeds are known in the field and may be determined by routine experiments. Further details are provided below.

Soluble precursor of the cation of the support material ("Cation precursor"):In principle, any soluble and combustible compound containing the desired cation is suitable for the process as disclosed herein. Preferably, carboxylates of metal salts such as acetates or 2-ethylhexanoates are used. These compounds may be formed in-situ by dissolving an appropriate basic compound, such as Ca(OH)2, Bi(OH)3, Bi203 in the appropriate acid, such as 2-ethylhexanoic acid.

Soluble precursor of the anion of the support material ("Anion precursor") : In principle, any soluble and combustible compound containing sulfur, phosphorous and / or carbon is suitable for the process as disclosed herein. Typically, dimethylsulphoxide is used for obtaining sulphates, tributylphosphate is used for obtaining phosphates. For the manufacture of carbonates, the solvent or anion of the cation-precursor is a suitable source.

Soluble silver precursor: In principle, any soluble and combustible silver compound is suitable for the process as disclosed herein. Suitable silver salts include silver 2-ethylhexanoate, or silver acetate in 2-ethylhexanoate.

Solvent: The addition of a solvent is not necessary, but preferred. A solvent may be added to reduce viscosity of the feed, to improve combustion properties, to obtain as stable solution or to provide a carbon source for the formation of carbonates. It is advantageous to use solvents with high boiling point. Typical examples include 2-ethylhexanoic acid, toluene and xylene.

In an alternative embodiment, the invention relates to a process for manufacturing nanoparticles as described herein comprising the steps of providing a cation-precursor, anion-precursor and/or silver precursor as described above by separate feeds to the flame spray pyrolysis. This is considered advantageous, in cases where the precursors may react prior to the FSP process.

Further details on the manufacturing may be found in the examples.

The invention further relates to nanoparticles obtained by a process as described herein.

The invention further relates in a fifth aspect to method for preparing an antimicrobial composite as described herein.

In general, the manufacturing is done by incorporation of the nanoparticles as described herein in a polymer, polymer solution or a polymer precursor. The use of metallic silver supported on an inorganic material (i.e. the use of nanoparticles as described herein) allows for facile dispersion of the particulate material in a polymeric substrate or polymer precursor. A low water content of the particles as described above is advantageous in case of dispersing them in hydrophobic polymers or pre-polymers to obtain best possible results in terms of dispersibility. Low water content is also advantageous in terms of thermal post treatment of the polymer which would result in the release of water vapor or bubble formation in the used polymeric material.

In one embodiment, the invention relates to a process for manufacturing a composite as described herein, comprising the step of i) suspending nanoparticles as described herein in a diluent, in particular an alcohol; ii) adding the thus obtained suspension to a polymer precursor which is optionally dissolved or suspended in a diluent; iii) effecting polymerization and iv) optionally removing the solvent/diluent; whereby step iv) and iii) may also take place simultaneously.

In a further embodiment, the invention relates to a process for manufacturing a composite as described herein, comprising the step of i) suspending nanoparticles as described herein in a diluent, in particular an alcohol; ii) combining the thus obtained suspension with a polymer solution and iii) optionally removing the diluent/solvent.

In a further embodiment, the invention relates to a process for manufacturing a composite as described herein, comprising the step of i) suspending nanoparticles as described herein in a diluent, in particular an alcohol; ii) combining the thus obtained suspension with a polymer and iii) optionally removing the solvent, whereby said diluent is capable of dissolving said polymer.

In a further embodiment, the invention relates to a process for manufacturing a composite as described herein, comprising the step of i) suspending nanoparticles as described herein in a polymer melt, and ii) shaping the dispersion. This process is advantageously effected in an extruder.

Each of the individual steps as described above (manufacturing of nanoparticles, polymers, polymer-precursors; manufacturing of suspensions/solutions; removing of solvents/diluents) are known in the field and may be performed using standard equipment. Further, the nanoparticles may be added to the polymer or vice versa, which is reflected by the term combining". Thus, the composites as described herein are easy to manufacture and conveniently available, even on a large scale.

In the case of incorporation in a polymer, the dispersion of the nanoparticles-can be achieved by an extruder or other compounders known in the field, followed by the formation of the desired article in a specific shape such as tubes, films, etc.

It is understood that in the context of this invention the term diluent / solvent also applies to mixtures of diluents / solvents.

The invention further relates in a sixth aspect to the manufacture of articles containing such nanoparticles or composites.

In one aspect, the invention relates to a process for manufacturing a coating or foil as described herein comprising the step of extruding or coating a composite material as described herein.

In an advantageous embodiment, the formation of a film or coating from a polymer solution or polymer precursor containing the antimicrobial silver/support material comprises the steps of:
i. Dispersing the nanoparticles as described herein in a solvent, polymer solution or polymer; precursor e.g. by ultrasonication or high shear mixing.
ii. Optionally adding and dissolving polymer in the dispersion;
iii. Forming a polymeric, solid film material or coating with the mixture by applying a conventional coating method such as roll coating, spray coating, gap coating, air knife coating, immersion (dip) coating, curtain coating, or slot die coating;
iv. Curing the film or coating, e.g. thermally or by UV radiation.

The invention further relates in a seventh aspect to the use of such composites.

The composite material as described herein may be used in a number of applications, in particular in applications where contamination with or presence of microorganisms i) is undesired and /or ii) shall be prevented and/or iii) shall be reduced.

Thus, the invention relates to the use of a composite in polymeric commodity products; for the coating of large areas (such as paints) and other polymeric coatings for surfaces / devices.

Further, the invention relates to the use of a composite as described herein or a foil as described herein as a packaging material, in particular in food packaging, pharmaceutical packaging, packaging of medical devices, kitchen and household devices.

Further, the invention relates to the use of a composite as described herein or a coating as described herein to coat surfaces of buildings or devices, in particular coatings for sanitary facilities, hospital facilities and air conditioning systems.

Further, the invention relates to the use of a composite as described herein as paint or as a part of a paint composition.

Further, the invention relates to the use of a composite as described for the manufacture of fibers and to the use of such fibres to manufacture woven or non-woven material, such as cloth or filters.

Further, the invention relates to the use of a composite material or cloth or fibres as described herein in water purification systems.

The invention further relates in an eight aspect to the use of nanoparticles as disclosed herein as antimicrobial agent. In general, the nanoparticles as described herein may be used in a number of applications, in particular in applications where contamination with microorganisms or presence of microorganisms i) is undesired and /or ii) shall be prevented and/or iii) shall be reduced. ("control of microorganisms")

Nanoparticles of the present invention are particular useful for the control of microorganisms of the class of gram negative bacteria and yeasts.

Further, the invention relates to the use of nanoparticles as described herein in environments with high sulphur concentration. A high sulphur concentration is typically found in biological environments or in contact with such environment. Often, high sulphur concentrations are due to the presence of cystein and cystin aminoacids from organisms. Concentrations can be very different but concentrations in the range from 10 ppm to 10'000 ppm (parts per million mass), preferably from 100 ppm to 10000 ppm are considered high sulphur concentrations. For the avoidance of doubt, the sulphur concentration is irrespective of the oxidation state (e.g. +6, 0, -2) or binding mode (organic or inorganic) of the sulphur. The "Trojan horse effect" as described above may be predominantly responsible for the efficiency of the nanoparticles as disclosed herein in environments with high sulfur concentration. For systems with persistent carriers, silver ions would be literally disposed while forming silver-sulfur compounds such as silver sulfide which are even less water soluble than silver metal. As a result the silver concentration would decrease to ineffective or insufficiently effective concentrations.

The nanoparticles as described herein may be used as a paint additive.

Further, the invention relates to the use of the nanoparticles as described herein as disinfecting agent. Correspondingly, the invention relates to the use of the nanoparticles as an additive to cleaning agents (dispersed in a liquid). Thus, the.nanoparticles may be used in a powder formulation or liquid formulation for the disinfection of surfaces, in particular sanitary environments and hospitals, food production facilities and surfaces in public transportation.

Further, the invention relates to the use of the nanoparticles as described herein for disinfection of gas streams. This may be achieved by injecting an effective amount of nanoparticles as a powder formulation into said gas stream.

Further, the invention relates to the use of the nanoparticles as described herein for disinfection of food or pharmaceuticals. The disinfection can be achieved by addition of the antimicrobial nanoparticles or by applying it to the surface of the food or pharmaceutical. The application can be done in the form of a powder or an antimicrobial nanoparticle containing liquid.

Further, the invention relates to the use of the nanoparticles as described herein as a cloth treatment e.g. for limiting or preventing microbial contamination of the article during retail or storage. This may be achieved either by application of an effective amount of nanoparticles in a powder formulation or a liquid formulation to said article.

### Brief Description of the Drawings

The invention will be better understood and objects other than those set forth above will become apparent when consideration is given to the following detailed description thereof. Such description makes reference to the annexed drawings; a brief description is given below:
Figure 1: High-resolution transmission (a) and scanning transmission electron (b, c, d) images of pure TCP (a), 1 Ag-TCP (b), 5 Ag-TCP (c), and 10 Ag-TCP (d) showing a primary particle size of TCP in the range of 20-50 nm. Ag-doped samples (b, c, d) contain finely dispersed Ag particles (bright spots) with a smallest diameter of around 2-4 nm. Increasing the content of silver resulted in the formation of larger Ag clusters with a size around 10 nm (d).
Figure 2: Hydrodynamic particle size distribution as determined by X-ray disk centrifugation. Both samples (1 Ag-TCP and 5 Ag-TCP) exhibit a very similar lognormal size distribution between 15-200 nm.
Figure 3: Relative number concentration of the silver particle size for Ag-TCP (1 Ag-TCP and 5 Ag-TCP) and Ag-SiO₂ powders (1 Ag-SiO₂ and 5Ag-SiO₂). For low (1%(w/w)) silver content the size of the silver particles are very similar whereas for high (5%(w/w)) silver content a shift to smaller particles for TCP was observed. The size of the silver particles stays predominantly below 4 nm for all samples.
Figure 4: UV-Vis spectra of different Ag-TCP containing films with a thickness of ~ 10µm showing high transmission in the visible range.

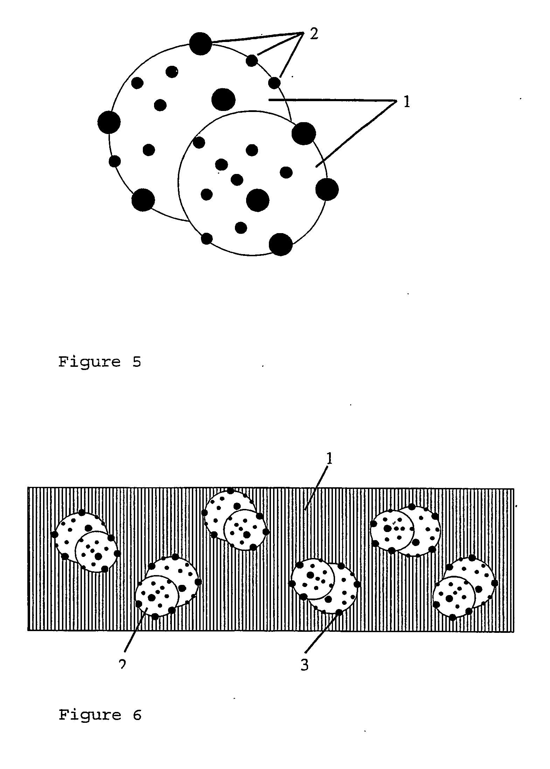

Figure 5: Schematic drawing of antimicrobial nanoparticles as described herein showing support material 1 and metallic silver particles 2.
Figure 6: Schematic drawing of a composite as described herein showing polymer 1, support material 2, and metallic silver particles 3.

### Modes for Carrying Out the Invention

### Examples

### 1. Composite preparation

Silver tricalcium phosphate nanoparticles (Ag-TCP) and silver silica (Ag-SiO₂) were prepared by flame spray pyrolysis as described in [3], which is incorporated by reference. The silver precursor was obtained by dissolving silver acetate in 2-ethylhexanoic acid (puriss. ≥99%, Fluka). Calcium hydroxide (Riedel de Haen, Ph. Eur.) dissolved in 2-ethylhexanoic acid (puriss. ≥99%, Fluka) and tributyl phosphate (puriss. ≥99%, Fluka) were used as calcium and phosphate sources, respectively [2, 4] while hexamethyldisiloxane (HMDSO, >98%, Lancaster Synthesis GmbH) was used as silica precursor. The correspondingly mixed liquid was diluted to a final metal concentration of 0.75 M with toluene (puriss p.a., Ph. Eur., ≥99.7%, Riedel de Haen) and fed through a capillary (diameter 0.4 mm) into a methane/oxygen flame at a rate of 5 ml min⁻¹. Oxygen (5 L min⁻¹, 99.8%, Pan Gas) was used to disperse the liquid leaving the capillary and resulted in a burning spray of about 10 cm height [2]. The as-formed particles were collected on a glass fibre filter (Whatmann GF/A, 25.7 cm diameter), placed on a cylinder mounted above the flame, by the aid of a vacuum pump (Busch Seco SV 1040 C). After removal of the product from the filter the particles where sieved (450 µm mesh) and 1g powder was dispersed in 16g 2-propanol (Ph. Eur., Fluka). Dispersion was done using an ultra sonic mini flow cell (Dmini, Hielscher, 5 bar water pressure, power 250 W, frequency 24 kHz). The flow rate was adjusted with a peristaltic pump (REGLO Digital MS-2/6, Ismatec) to 2 ml/min. Subsequently, 4g of a thermoplastic silicone elastomer (Geniomer200, Wacker Silicone) was dissolved in the dispersion by mixing at room temperature. The obtained mixture was applied (50 µm wet coating) on a 36 µm PET film using an automatic film applicator coater (ZAA 2300, Zehntner Testing Instruments) equipped with a spiral doctor blade. The applied film was cured at ambient condition resulting in a 10 µm thick, dry coating containing 20%(w/w) of the flame-made powder.

### 2. Characterization methods

Hydrodynamic particle size distributions of the Ag-TCP powders were measured on an X-ray disk centrifuge (BI-XDC, Brookhaven Instruments) [1, 5] using 3 % (wt/vol) of powder in absolute ethanol (Fluka). Prior to analysis the powder was dispersed by ultrasonication (UP400S, 24 kHz, Hielscher GmbH) at 200 W for 5 min. To determine the silver content the powders were digested in concentrated nitric acid and analyzed by flame atomic absorption spectrometry (AAS) on a Varian SpectrAA 220FS (slit width 0.5 nm, lamp current 4.0 mA) applying an air (13.5 L min⁻¹, PanGas)/acetylene (2.1 L min⁻¹, PanGas) flame and measuring absorption at a wavelength of 328.1 nm. High-resolution transmission electron microscopy (HRTEM) images were recorded on a CM30 ST (Philips, LaB6 cathode, operated at 300 kV, point resolution > 2 Å). Particles were deposited onto a carbon foil supported on a copper grid. Scanning transmission electron microscopy (STEM) images were obtained with a high-angle annular dark-field (HAADF) detector (Z contrast). Antimicrobial activity was determined according to ASTM standards E2180-01 and E2149-01 (ASTM: American Society for Testing and Materials) at a temperature of 25°C. All values for reduction of colony forming units per milliliter (CFU/ml) are based on the "bacteria only" reference for powder samples and on the reference film (Geniomer200) for film samples. Further the comparison to the corresponding reference has been determined at the given contact time.

### 3. Characteristics of Nanoparticles

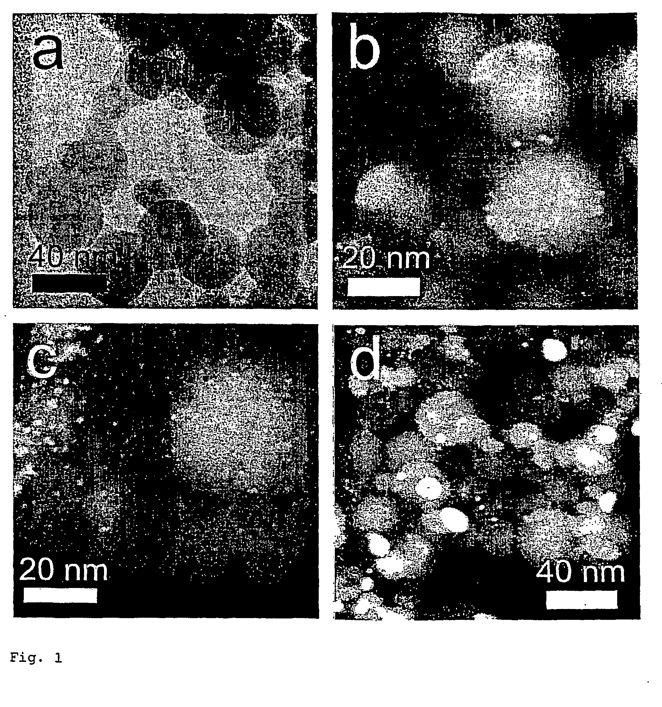

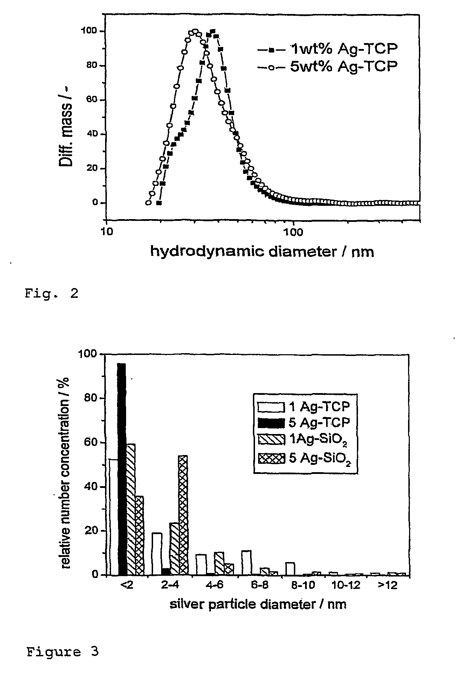

Flame synthesis is known as a most versatile tool for the production of nanoparticulate oxides and metal salt materials. While the pure tricalcium phosphate (TCP, Figure 1a) showed no distinct electron density gradients all silver-doped TCP samples (Figure 1b, c, d) carry small silver nanoparticles (bright spots). A very dense, yet highly dispersed coverage with silver was observed for 5Ag-TCP (Figure 1c). The increase to 10%(w/w) silver (sample 10Ag-TCP) resulted in the formation of relatively large Ag clusters with a size of >10 nm (Figure 1d). The primary particle size of the TCP ranging from 20-50 nm seems unaffected by the incorporation of silver in the system. This observation by electron microscopy is in line with the specific surface areas of between 71.6 m² g⁻¹ to 78.0 m² g⁻¹ for pure TCP and silver containing TCP (1Ag-TCP to 10Ag-TCP). A comparison of the hydrodynamic diameter between sample 1Ag-TCP and 5Ag-TCP (Figure 2) further corroborates the similarity in morphology. Both samples have a particle size in the range of 15-200 nm resembling a lognormal distribution as generally observed for flame-made powders. Silver silica samples (1Ag-SiO₂ and 5Ag-SiO₂) show a very similar morphology although the primary particles size of the carrier, silica, tends to lower values (i.e. specific surface area SSA is considerably higher around 300 m² g⁻¹) which can be attributed to the higher melting point compared to TCP. Atomic absorption spectrometry confirmed the robustness of the flame process in terms of silver content, c.f. table below.

| powder sample | Ag content^{a} / %(w/w) | SSA_{BET}^{b} / m² g⁻¹ | reduction after 2h compared to test without particles / % |
|---|---|---|---|
| TCP | 0.004 | 78.0 | 54.06 |
| 1Ag-TCP^{c} | 0.92 | 71.6^{c} | - |
| 2Ag-TCP | 1.88 | 72.6 | - |
| 3Ag-TCP | 2.82 | 75.5 | - |
| 4Ag-TCP | 3.87 | 72.4 | - |
| 5Ag-TCP | 5.19 | 75.8 | 99.98 |
| 7.5Ag-TCP | 8.21 | 74.7 | - |
| 10Ag-TCP | 10.7 | 74.8 | - |
| 1Ag-SiO₂^{c} | 1.09 | 271^{c} | - |
| 5Ag-SiO₂ | 4.33 | 357 | - |

| | | | |
|---|---|---|---|
| ^{a} error ±10% ^{b} specific surface area, error ±3%. Note that this is the nitrogen adsorption capacity and comprehends the whole material (support and silver). ^{c} note the very different Ag particle size in the characterization part below. | | | |

### 4. Characteristics of composite

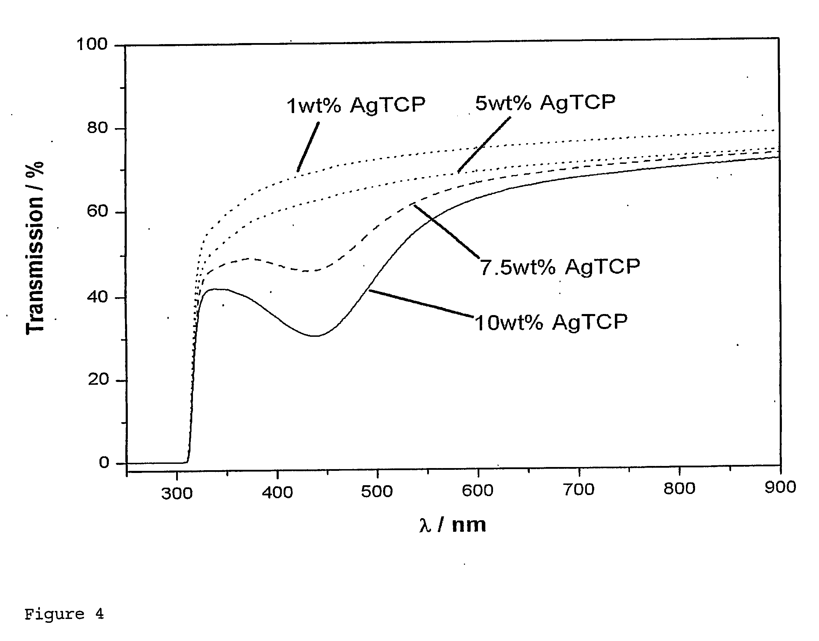

Since transparency is a market-defining factor for packaging materials or coatings in general, the UV-Vis spectra of different Ag-TCP films were recorded (Figure 4). Both 1Ag-TCP and 5Ag-TCP films showed high transmission of >50% at wavelengths above 350 nm. Generally, the transmission decreases for increased silver content. An increasingly brownish coloration is observed optically by eye and also by UV-Vis measurements. This is expressed by the evolution of a distinct peak around 440 nm for films with 7.5Ag-TCP and 10Ag-TCP.

### 5. Antimicrobial tests of antimicrobial nanoparticles

In a first antimicrobial test the activity of the pure particles (TCP and 5 Ag-TCP) was investigated by ASTM E2149-01 (Table 1) using a contact time of 2 hours with E.coli C43 (working bacterial concentration 1x10⁵ CFU/ml). 5 mg of powder was immersed in 8 ml of buffered working bacterial solution. The silver containing sample 5Ag-TCP showed a strong, nearly 4-log reduction after only two hours of exposure to the material. The pure TCP had only minor influence on the growth of the E.coli yielding half the CFU/ml compared to the reference.

### 6. Antimicrobial tests of composites

The same test as for the powders was conducted with a set of films containing 20%(w/w) of the powder applying a contact time of 26 hours (Table 2). An area of 6 cm² film (corresponding to ^{~}15 mg powder for a loading of 20%(w/w) powder) was immersed in 8 ml of working bacterial solution (1×10⁶ CFU/ml). The film containing 5Ag-TCP powder showed a 6-log reduction which is exceptionally high for film materials.

**Table 1**

| film sample | reduction after 26 h compared to the reference film/ % |
|---|---|
| TCP film | 25.99 |
| 5Ag-TCP film | 99.99993 |

In a third set of experiments different coatings were tested for their efficiency against E.coli, American Type Culture Collection (ATCC) No. 8739 with both testing methods ASTM E2149-01 (dynamic contact test) and E2180-01 (static test for hydrophilic materials, Table 3). For ASTM E2149-01 two contact time points of 2h and 24h were chosen as to access short and long term effects. The film containing only TCP powder showed no change in bacteria concentration for both time points. A minor reduction of approx. However, the film containing 5Ag-TCP showed nearly a 6-log reduction after 24h whereas at time point 2h the reduction was not significantly changed. Without being bound to theory, it is believed that the mechanism is not instantaneous but rather proceeds via a slow and steady bacteria destruction keeping in mind that for the reference film a 3-log CFU/ml increase was observed in the 24 hours experiment. Hence, the antimicrobial film has not only to struggle with the initial bacteria but also has to prevail over the bacteria's growth. For the static contact test ASTM E2180-01 the bacteria concentration for film sample containing TCP increased by a factor of ten compared to the reference. Again the addition of 5Ag-TCP to the film entailed a most efficient 5-log reduction.

**Table 2**

| film sample | | reduction / % ASTM E2149-01, E.coil ATCC 8739 | | reduction / % ASTM E2180-01, E.coil ATCC 8739 |
|---|---|---|---|---|
| | Contact time: | 2h | 24h | 24h |
| TCP | | 14.29 | -4.55 | -977 |
| 5Ag-TCP | | 69.81 | 99.9998 | 99.998 |

### 7. Tests of composites against other microorganisms

The efficiency of the materials was further investigated for different, commonly occurring microorganisms according to ASTM E2180-01, 24h. The film containing 5Ag-TCP showed a strong influence on P.aeruginosa and C.albicans with an exceptional 6 to 7-log reduction and a 4-log reduction, respectively. Both microbes were not influenced in contact with the TCP film (4% increase for P.aeruginosa and 18% reduction for C.albicans). Again the role of the silver as the active, deadly agent is confirmed. So far, a high (3 to7-log reduction) antimicrobial activity was observed for 5Ag-TCP containing films especially against Gram-negative bacteria (E.coli, P.aeruginosa) and a yeast-like fungus (C.albicans). Microbes with a more robust defense mechanism such as Gram-positive S.aureus and the spore form of A.niger were far less affected.

**Table 3**

| microorganism | reduction / % ASTM E2180-01, 24h | |
|---|---|---|
| | TCP film | 5Ag-TCP film |
| P.aeruginosa ATCC 9027 (gram neg.) | -4.00 | 99.99996 |
| S.aureus ATCC 6538 (gram pos.) | -50.25 | 64.00 |
| C.albicans ATCC 10231 (yeast) | 17.45 | 99.994 |
| A.niger spores ATCC 16404 (fungi spores) | 36.36 | 13.05 |

### 8. Activity as a function of support material

Further investigation on film materials containing different Ag-TCP and Ag-SiO₂ samples were conducted by ASTM E2180-01. E.coli (ATCC 8739) was used and tested with films containing 1 to 10 %(w/w) silver-doped TCP and 1 and 5 %(w/w) silica powders (table 5). All silver-TCP films showed a significant activity resulting in a 4 to 6-log reduction. For a loading of over 1%(w/w) Ag the reduction ranges from nearly 10'000 fold (5Ag-TCP, 10Ag-TCP) up to nearly 100'000 fold (2Ag-TCP, 3Ag-TCP, 7.5Ag-TCP). The high silver-loaded silica (5Ag-SiO₂) reduced the E.coli by a factor of 10'000 (4-log reduction). Only around a ten fold reduction was observed for 1Ag-SiO₂ films. This clearly shows that TCP is a much superior support for silver nanoparticles than silica as TCP with 1 wt % silver afforded an over 4-log bacteria reduction.

**Table 4**

| film sample | reduction / % after 24h ASTM E2180-01, E.coil ATCC 8739, |
|---|---|
| 1Ag-TCP film | 99.993 |
| 2Ag-TCP film | 99.9998 |
| 3Ag-TCP film | 99.9998 |
| 5Ag-TCP film | 99.998 |
| 7.5Ag-TCP film | 99.9998 |
| 10Ag-TCP film | 99.998 |
| 1Ag-SiO₂-film | 92 |
| 5Ag-SiO₂-film | 99.990 |

### References

1. Limbach, L.K., et al., Oxide nanoparticle uptake in human lung fibroblasts: Effects of particle size, agglomeration, and diffusion at low concentrations. Environmental Science & Technology, 2005. 39(23): p. 9370-9376.
2. Loher, S., et al., Fluoro-apatite and calcium phosphate nanoparticles by flame synthesis. Chemistry of Materials, 2005. 17(1): p. 36-42.
3. Madler L, Kammler H K, Mueller R and Pratsinis S E 2002 Controlled synthesis of nanostructured particles by flame spray pyrolysis J. Aerosol. Sci. 33 369-89
4. Stark, W.J., et al., *Falme synthesis of metal salt nanoparticles, in particular calcium and phosphate comprising nanoparticles.* 2005.
5. Staiger, M., et al., Particle size distribution measurement and assessment of agglomeration of commercial nanosized ceramic particles. Journal of Dispersion Science and Technology, 2002. 23(5): p. 619-630.

## Claims

1. Nanoparticles containing a non-persistent support material and metallic silver particles on the surface of said support material wherein:
a. at least 95%(w/w) of said nanoparticles have a hydrodynamic diameter <500nm;
b. said nanoparticles have a water content <5%(w/w);
c. said support material is a salt wherein the anion is selected from the group consisting of phosphates, carbonates, sulphates and mixtures thereof;
d. at least 95% (n/n)of said metallic silver particles have a diameter of <10nm.

2. Nanoparticles according to claim 1 wherein the silver content is at least 0.1%(w/w).

3. Nanoparticles according to any of the preceding claims
wherein said support material is a salt wherein the cation is selected from the group consisting of calcium, bismuth, magnesium and mixtures thereof.

4. Nanoparticles according to any of the preceding claims
wherein said support material is selected from the group consisting of tricalcium phosphate and magnesium-doped tricalcium phosphate.

5. Nanoparticles according to any of the preceding claims
wherein said support material is XRD-amorphous tricalcium phosphate

6. Composite material containing a polymer and nanoparticles according to any of the preceding claims, dispersed in said polymer.

7. Composite material according to claim 6 wherein said polymer has a water contact angle > 65° at 25 °C.

8. Composite material according to claim 6 to 7 wherein said polymer is selected from the group consisting of silicones, polyethylene, polypropylene, polystyrene, polycarbonates, polyetheretherketones, poly(vinyl chloride), poly(ethylene terephtalate), polyamides, poly-tetrafluoroethylene, poly(vinyl acetate), polyesters, polyurethanes, styrene-block copolymers, polymethyl methacrylate, polyacrylates, acrylic-butadiene-styrene copolymers, natural and synthetic rubber, acrylonitrile rubber , combinations thereof and copolymers thereof.

9. Composite material according to claim 6 to 8 wherein said polymer is biodegradable.

10. An article, in particular a foil, coating, fibre, woven material or non-woven material, containing a composite according to any of claims 6 to 9 or nanoparticles according to any of claims 1 to 5.

11. A process for manufacturing nanoparticles according to any of claims 1 to 5 comprising the steps of
a. preparing a combustible solution containing
i. a soluble precursor of the cation of the support material,
ii. a soluble silver precursor
iii. a soluble precursor of the anion of the support material
iv. optionally a solvent,
b. subjecting said solution to a flame spray pyrolysis process.

12. A process for manufacturing a composite according to any of claims 6 to 9 comprising the step of
a. suspending nanoparticles as defined in any of claims 1 to 5 in a diluent
b. combining the thus obtained suspension with a polymer precursor which is optionally dissolved or suspended in a diluent
c. effecting polymerization and
d. optionally removing the diluent;
or
a. or suspending nanoparticles as defined in any of claims 1 to 5 in a diluent
b. combining the thus obtained suspension with a polymer dissolved in a solvent and
c. optionally removing the diluent/solvent;
or
a. suspending nanoparticles as defined in any of claims 1 to 5 in a diluent
b. combining the thus obtained suspension with a polymer and
c. optionally removing said diluent
wherein said diluent is capable of dissolving said polymer; or
a. suspending nanoparticles as defined in any of claims 1 to 5 in a polymer melt, preferably by extrusion, and
b. shaping the dispersion.

13. A process for manufacturing a coating or a foil according to claim 11 comprising the step of extruding or coating a composite material according to any of claims 6 to 9.

14. Use of
a. a composite material according to any of claims 6 to 9 or a foil according to claim 10 as a packaging material, in particular in food packaging, pharmaceutical packaging, packaging of medical devices, kitchen and household devices;
b. a composite material according to any of claims 6 to 9 or a coating according to claim 10 for coatings in sanitary facilities, hospital facilities and air conditioning systems;
c. a composite material according to any of claims 6 to 9 or a cloth or fibres according to claim 10 in water purification systems.

15. Use of nanoparticles according to any of claim 1 to 5
a. as an antimicrobial component;
b. as a paint additive;
c. as a cleaning agent additive;
d. for disinfection of a gas stream;
e. for disinfection of food and pharmaceuticals;
f. for cloth finishing or cloth treatment;
in each case excluding therapeutic uses.

## Patentansprüche

1. Nanopartikel umfassend ein nicht beständiges Trägermaterial und metallische Silberpartikel an der Oberfläche des besagten Trägermaterials, wobei:
a. zumindest 95% (w/w) besagter Nanopartikel einen hydrodynamischen Durchmesser <500 nm aufweisen;
b. besagte Nanopartikel einen Wassergehalt von kleiner 5% (w/w) aufweisen;
c. besagtes Trägermaterial ein Salz ist, wobei das Anion ausgewählt ist aus der Gruppe umfassend Phosphate, Carbonate, Sulfate und Gemische davon;
d. zumindest 95% (n/n) besagter metallischer Silberpartikel einen Durchmesser kleiner als 10 nm aufweisen.

2. Nanopartikel gemäss Anspruch 1, worin der Silbergehalt zumindest 0.1% (w/w) ist.

3. Nanopartikel gemäss einem der vorgängigen Ansprüche, worin besagtes Trägermaterial ein Salz ist, in welchem das Kation ausgewählt ist aus der Gruppe umfassend Calcium, Wismut, Magnesium und Mischungen davon.

4. Nanopartikel gemäss einem der vorgängigen Ansprüche, worin besagtes Trägermaterial ausgewählt ist aus der Gruppe umfassend Trikalziumphosphat und Magnesium dotiertes Trikalziumphosphat.

5. Nanopartikel gemäss einem der vorgängigen Ansprüche, worin besagtes Trägermaterial XRD-amorphes Trikalziumphosphat ist.

6. Verbundmaterial umfassend ein Polymer und Nanopartikel gemäss einem der vorgängigen Ansprüche, welche in besagtem Polymer dispergiert sind.

7. Verbundmaterial gemäss Anspruch 6, wobei besagtes Polymer ein Wasserkontaktwinkel >65° bei 25 °C aufweist.

8. Verbundmaterial gemäss Anspruch 6 oder 7, worin besagtes Polymer ausgewählt ist aus der Gruppe umfassend Silikone, Polyethylen, Polypropylen, Polystyrol, Polycarbonate, Polyetheretherketone, Polyvinylchlorid, Polyethylenterephtalt, Polyamide, Polytetrafluoroethylen, Polyvinylacetat, Polyester, Ployurethane, Styrolblockcopolymere, Polymethylmethacrylat, Polyacrylate, Acrylbutadienstyrolcopolymere, natürliche und synthetische Kautschuke, Acrylnitrilkautschuke, Kombinationen davon und Kopolymere davon.

9. Verbundmaterial gemäss Anspruch 6 bis 8, wobei besagtes Polymer biologisch abbaubar ist.

10. Ein Gegenstand, insbesondere eine Folie, eine Beschichtung, eine Faser, gewobenes Material oder gefilztes Material enthaltend ein Verbundmaterial gemäss einem der Ansprüche 6 bis 9 oder Nanopartikel gemäss einem der Ansprüche 1 bis 5.

11. Ein Verfahren zur Herstellung von Nanopartikeln gemäss einem der Ansprüche 1 bis 5 umfassend die Schritte:
a. Herstellen einer brennbaren Lösung enthaltend
i. ein lösliches Präkursor des Kations des Trägermaterials,
ii. ein löslicher Silberpräkursor,
iii. ein löslicher Präkursor des Anions des Trägermaterials,
iv. gegebenenfalls ein Lösungsmittel,
b. Zuführen besagter Lösung zu einem Flammspraypyrolysesprozess.

12. Ein Verfahren zur Herstellung eines Verbundmaterials gemäss einem der Ansprüche 6 bis 9 umfassend die Schritte :
a. Suspendieren von Nanopartikeln wie in einem der Ansprüche 1 bis 5 definiert in einem Verdünnungsmittel
b. Zusammenführung der so erhaltenen Suspension mit einem Polymerpräkursor, welcher gegebenenfalls gelöst oder suspendiert mit einem Verdünnungsmittel ist
c. Durchführen der Polymerisation
d. gegebenenfalls Entfernung des Verdünnungsmittels;
oder
a. Suspendierung von Nanopratikeln wie in einem der Ansprüche 1 bis 5 definiert in einem Verdünnungsmittel 1
b. Kombinieren der so erhaltenen Suspension mit einem Polymer gelöst in einem Lösungsmittel und
c. gegebenenfalls entfernen des Verdünnungsmittels/Lösungsmittels;
oder
a. Suspendierung von Nanopartikeln wie in einem der Ansprüche 1 bis 5 definiert in einem Verdünnungsmittel
b. Kombinieren der so erhaltenen Suspension mit einem Polymer und
c. gegebenenfalls Entfernung besagten Verdünnungsmittels,
wobei besagtes Verdünnungsmittel geeignet ist, das Polymer zu lösen
oder
a. Suspendieren von Nanopartikeln wie in einem der Ansprüche 1 bis 5 definiert in einer Polymerschmelze, bevorzugt durch Extrusion, und
b. Formen der Dispersion.

13. Ein Verfahren zur Herstellung einer Beschichtung oder einer Folie gemäss Anspruch 11 umfassend den Schritt des Extrudierens oder Beschichtens eines Verbundmaterials gemäss einem der Ansprüche 6 bis 9.

14. Verwendung von
a. einem Verbundmaterial gemäss einem der Ansprüche 6 bis 9 oder einer Folie gemäss Anspruch 10 als Verpackungsmaterial, insbesondere zur Lebensmittelverpackung, pharmazeutischen Verpackung, Verpackung von medizinischen Geräten, Küchen- und Haushaltsgegenständen;
b. einem Verbundmaterial gemäss einem der Ansprüche 6 bis 9 oder einer Beschichtung gemäss Anspruch 10 für Beschichtungen in Sanitäreinrichtungen, Hospitaleinrichtungen oder Klimaanlagen;
c. einem Verbundmaterial gemäss einem der Ansprüche 6 bis 9 oder von Stoffen oder Fasern gemäss Anspruch 10 in Systemen zur Wasserreinigung.

15. Verwendung von Nanopartikeln gemäss einem der Ansprüche 1 bis 5
a. als Antimikrobielle Komponente;
b. als Farbzusatz;
c. als Additiv in Reinigungsmitteln;
d. zur Desinfektion eines Gasstromes;
e. zur Desinfektion eines Lebensmittels oder Pharmazeutikums;
f. zum Finishen oder Behandeln von Stoffen;
in jedem Fall therapeutische Verwendungen ausschliessend.

## Revendications

1. Nanoparticules contenant un matériau porteur non persistant et des particules de métal d'argent sur la surface dudit matériau porteur, dans lesquels:
a. au moins 95% (m/m) desdits nanoparticules ont un diamètre hydrodynamique inférieur à 500 nm,
b. lesdits nanoparticules ont une teneur en eau inférieure à 5% (m/m),
c. ledit matériau porteur est un sel, dans lequel l'anion est sélectionné parmi le groupe constitué de phosphates, de carbonates, de sulfates et de mélanges de ceux-ci,
d. au moins 95% (m/m) desdits particules de métal d'argent ont un diamètre inférieur à <10nm.

2. Nanoparticules suivant la revendication 1, dans lesquels la teneur en argent est au moins de 0,1% (m/m).

3. Nanoparticules suivant une quelconque des revendications précédentes, dans lesquels ledit matériau porteur est un sel, dans lequel le cation est sélectionné parmi le groupe constitué de calcium, de bismuth, de magnésium et de mélanges de ceux-ci.

4. Nanoparticules suivant une quelconque des revendications précédentes, dans lesquels ledit matériau porteur est sélectionné parmi le groupe constitué de phosphate tricalcique et de phosphate tricalcique dopé avec du magnésium.

5. Nanoparticules suivant une quelconque des revendications précédentes, dans lesquels ledit matériau porteur est un phosphate tricalcique amorphe en XRD.

6. Matériau composite contenant un polymère et des nanoparticules suivant une quelconque des revendications précédentes, les nanoparticules étant dispersés dans ledit polymère.

7. Matériau composite suivant la revendication 6, dans lequel ledit polymère présente un angle de contact avec l'eau supérieur à > 65° à 25°C.

8. Matériau composite suivant les revendications 6 à 7, dans lequel ledit polymère est sélectionné parmi le groupe constitué de silicones, de polyéthylène, de polypropylène, de polystyrène, de polycarbonates, de polyétheréthercétones, de chlorure de polyvinyle, de polyéthylène téréphtalate, de polyamides, de polytétrafluoroéthylène, de polyacétate de vinyle, de polyesters, de polyuréthanes, de copolymères en bloc de styrène, de polyméthacrylate de méthyle, de polyacrylates, de copolymères de styrène-butadiène acryliques, de caoutchouc naturel et synthétique, de caoutchouc acrylonitrile, de combinaisons et de copolymères de ceux-ci.

9. Matériau composite suivant les revendications 6 à 8, dans lequel ledit polymère est biodégradable.

10. Un article, en particulier une feuille, un revêtement, une fibre un matériau tissé ou un matériau non tissé contenant un composite suivant une quelconque des revendications 6 à 9 ou des nanoparticules suivant une quelconque des revendications 1 à 5.

11. Procédé de fabrication de nanoparticules suivant une quelconque des revendications 1 à 5 comprenant les étapes consistant à:
a. préparer une solution combustible contenant
i. un précurseur soluble du cation du matériau porteur,
ii. un précurseur d'argent soluble
iii. un précurseur soluble de l'anion du matériau porteur
iv. optionnellement un solvant,
b. exposer ladite solution à un procédé de pyrolyse par pulvérisation à la flamme.

12. Procédé de fabrication d'un composite suivant une quelconque des revendications 6 à 9 comprenant les étapes consistant à:
a. suspendre des nanoparticules tels que définis dans une quelconque des revendications 1 à 5 dans un diluant
b. combiner la suspension ainsi obtenue avec un précurseur de polymère optionnellement dissolu ou suspendu dans un diluant
c. effectuer une polymérisation et
d. enlever optionnellement le diluant
ou
a. suspendre des nanoparticules tels que définis dans une quelconque des revendications dans un diluant
b. combiner la suspension ainsi obtenue avec un polymère dissolu dans un solvant et
c. enlever optionnellement le diluant/solvant
ou
a. suspendre des nanoparticules tels que définis dans une quelconque des revendications 1 à 5 dans un diluant
b. combiner la suspension ainsi obtenue avec un polymère et
c. enlever optionnellement ledit diluant
ledit diluant étant capable de dissoudre ledit polymère
ou
a. suspendre des nanoparticules tels que définis dans une quelconque des revendications 1 à 5 dans un polymère fondu, de préférence par extrusion et
b. donner une former à la dispersion.

13. Procédé de fabrication d'un revêtement ou d'une feuille suivant la revendication 11 comprenant l'étape qui consiste à extruder ou gainer un matériau composite suivant une des revendications 6 à 9.

14. Utilisation
a. d'un matériau composite suivant une quelconque des revendications 6 à 9 ou une feuille suivant la revendication 10 comme matériau d'emballage, en particulier dans le domaine de l'emballage de produits alimentaires, de produits pharmaceutiques, de dispositifs médicaux, de dispositifs de cuisine et de ménage,
b. d'un matériau composite suivant une quelconque des revendications 6 à 9 ou un revêtement suivant la revendication 10 pour des revêtements de sanitaires, d'équipements hospitaliers et de systèmes de conditionnement d'air,
c. d'un matériau composite suivant une quelconque des revendications 6 à 9 ou un tissu ou des fibres suivant la revendication 10 dans des systèmes d'épuration d'eau.

15. Utilisation de nanoparticules suivant une quelconque des revendications 1 à 5
a. comme composant antimicrobien,
b. comme additif de peintures,
c. comme additif d'agents de nettoyage
d. pour la désinfection d'un courant de gaz,
e. pour la désinfection de produits alimentaires et pharmaceutiques,
f. pour l'apprêt ou le traitement de tissus,
dans chaque cas, des utilisations thérapeutiques étant exclues.
